# EUROPÄISCHE PATENTSCHRIFT

(11) **EP 3 064 036 B1**
(45) Veröffentlichungstag und Bekanntmachung des Hinweises auf die Patenterteilung: **19.07.2017**
(21) Anmeldenummer: 14793809.6
(22) Anmeldetag: 23.10.2014
(51) Int. Cl.: H05B 7/06, C21C 5/52

(54) **VERFAHREN ZUM BETREIBEN EINES LICHTBOGENOFENS SOWIE LICHTBOGENOFEN**
METHOD FOR OPERATING AN ELECTRIC ARC FURNACE, AND ELECTRIC ARC FURNACE
PROCÉDÉ POUR FAIRE FONCTIONNER UN FOUR À ARC ET FOUR À ARC

(30) Priorität: 31.10.2013 DE 102013222158
(43) Veröffentlichungstag der Anmeldung: 07.09.2016
(73) Patentinhaber: Primetals Technologies Germany GmbH, 91052 Erlangen (DE)
(72) Erfinder: BALDAUF, Manfred, 91056 Erlangen (DE); HERGT, Martin, 90411 Nürnberg (DE); MATSCHULLAT, Thomas, 90542 Eckental (DE)
(74) Vertreter: Metals@Linz
(86) Internationale Anmeldenummer: PCT/EP2014/072751
(87) Internationale Veröffentlichungsnummer: WO 2015/062968

(56) Entgegenhaltungen:
- EP-A1- 0 548 042
- WO-A1-2013/064413
- WO-A2-03/037038
- DE-A1- 3 940 848
- GB-A- 135 905

## Beschreibung

Die vorliegende Erfindung betrifft ein Verfahren zum Betreiben eines Lichtbogenofens. Überdies betrifft die vorliegende Erfindung einen Lichtbogenofen zum Schmelzen eines Schmelzgutes.

Bei einem Lichtbogenofen, insbesondere einem Elektrolichtbogenofen, führt ein Elektrolichtbogen über Grafitelektroden festem Schrott und in einer späteren Phase einer Schmelze elektrische Energie in Form von Lichtbögen zu. In der ersten Phase wird der feste Schrott direkt durch den Lichtbogen und/oder indirekt durch die Abstrahlung des Lichtbogens aufgeheizt und eingeschmolzen. In späteren Phasen wird die Schmelze durch die Energie des Lichtbogens auf die gewünschte Zieltemperatur gebracht. Dabei ist ein hoher Energieeintrag in den Schrott bzw. die Schmelze wichtig, um die Schmelzdauer zur Gewährleistung hoher Produktionskapazitäten kurz zu halten und die Energieeffizienz des Prozesses zu steigern.

Üblicherweise wird mit einem Ofentransformator eine Mittelspannung in eine Niederspannung transformiert und an die Elektroden angelegt. Der Abstand der Elektroden zum Schrott bzw. zu der Schmelze kann variiert werden, um bei kleinem Abstand den Lichtbogen zu zünden und während des Betriebs durch Vergrößern des Abstands elektrische Betriebsparameter, wie die elektrische Spannung und/oder die Stromstärke, zu beeinflussen.

Während des Betriebs des Lichtbogenofens unterliegen die Grafitelektroden einem hohen Temperaturgradienten. Am oberen Ende ist die Elektrodentemperatur im Bereich der Umgebungs- bzw. Hallentemperatur, während das untere Ende knapp oberhalb der Schmelze ca. 3000 K heiß wird. Diese hohen Temperaturen führen in Verbindung mit dem Lichtbogen zu einem verstärkten Abbrand der Elektroden in der umgebenden Luft. Der Abbrand der Grafitelektroden ist zu ca. 50% der Seitenoxidation zuzuordnen. Im Übrigen ist der Abbrand proportional zum Quadrat der Stromstärke. Dies bedeutet, dass man beim Betrieb konventioneller Lichtbogenöfen versucht, möglichst hohe Stromstärken mit gleichzeitig kleinen Lichtbögen zu vermeiden, um den Grafitabbrand niedrig zu halten.

Temperaturgradienten entlang der Elektroden können weiterhin zu mechanischen Spannungen führen, die zum Abplatzen von Bruchstücken oder im Extremfall zum Abbrechen der Elektrode führen können. Ein Elektrodenbruch würde nicht nur zu erhöhtem Elektrodenverbrauch sondern auch zu Produktionsunterbrechungen und zur Aufkohlung des Stahls führen, wenn die Grafitelektrode oder Bruchstücke davon in die Schmelze fallen. Der Energieeintrag in die Schmelze bzw. in den Schrott wird heute ausschließlich durch die elektrischen Parameter und den mechanischen Abstand von der Elektrode zu dem Metall beeinflusst.

Aus der WO 2013/064413 A1 ist ein Verfahren zum Betreiben eines Lichtbogenofens bekannt, bei dem der Lichtbogen durch Zumischen von Zusatzstoffen beeinflusst werden kann, damit in den einzelnen Betriebsphasen des Lichtbogenofens bestimmte Kenngrößen vorteilhaft eingestellt werden können. Je nach Art des zugesetzten Zusatzstoffes kann die Leitfähigkeit im Lichtbogen und die Strahlungsleistung erhöht oder gesenkt werden.

Eine Erhöhung der Leitfähigkeit im Lichtbogen bzw. im Plasma führt zu größeren Elektrodenabständen und damit zu einer Verringerung der Stromschwankungen und dem sogenannten Flicker. Gleichzeitig wird die Strahlungsleistung erhöht und fällt großvolumig aus, so dass die großvolumige Energieabstrahlung zu einem schnellen Schrottaufheizprozess führt. Damit kann in dieser Phase der Energiebedarf reduziert werden. Zur Erhöhung der Leitfähigkeit im Lichtbogen kann ein Metall oder ein Metallsalz in das Plasma eingebracht werden.
Andererseits führt eine Verringerung der Leitfähigkeit des Plasmas zu einem geringen Elektrodenabstand und zu geringeren Strahlungsleistungen und somit auch zu niedrigeren Strahlungsverlusten an den Ofenwänden. Dadurch wird im Betrieb mit flüssiger Phase sehr effizient elektrische Energie in die Schmelze eingetragen. Zur Verringerung der Leitfähigkeit des Lichtbogens können Gase wie Argon, Stickstoff, Methan, Kohlendioxid oder dergleichen in das Plasma eingebracht werden.

Zum Einleiten der Gase in den Lichtbogen können Hohlelektroden aus Grafit verwendet werden, die in ihrem oberen Bereich entsprechende Nippel für den Anschluss von Gaszuführungen aufweisen. Über die Nippel kann das Gas in das Innere der Hohlelektrode und von dort in den Lichtbogen, der am unteren Ende der Hohlelektrode fußt, eingebracht werden.

Im Falle des konventionellen Lichtbogenofens zum Schmelzen von Schrott ist ein derartiges Verfahren bis dato noch nicht im Einsatz. Bei einigen Pfannenöfen ist das Prinzip der Gaseinleitung über Hohlelektroden hingegen bekannt. Hierbei wird aber vorrangig Argon eingeblasen, um eine Aufkohlung der Schmelze zu vermeiden.

Die Kühlung der Elektroden erfolgt üblicherweise auf der Außenseite durch Aufsprühen oder Herabrieseln von Wasser. Diese Maßnahme hatte nach ihrer Einführung vor ca. 30 Jahren einen immensen Einfluss auf den Grafitverbrauch. Da das herabrieselnde Wasser aber verdampft, wird der untere Teil der Elektrode nicht gekühlt. Zudem erfährt das Innere der Elektrode überhaupt keine Kühlwirkung. In diesem Zusammenhang beschreibt die WO 2013/064413 A1 weiterhin, dass dem Lichtbogen ein Zusatzstoff zugeführt werden kann, der eine Reaktion bewirkt, die aufgrund ihres Energieverbrauchs zu einer Kühlung der Elektrode führt.

Des Weiteren beschreibt die WO 03/037038 A2 eine Elektrode für einen Elektrolichtbogenofen mit einer Einrichtung zum Ausstoßen eines Fluids in Richtung eines Metallbades. Das Fluid umfasst zumindest eine wärmezersetzbare, Kohlenstoff reiche, brennbare Komponente. Die Komponente kann insbesondere ein gasförmiger Kohlenwasserstoff, ausgewählt aus der Gruppe Methan, Ethan, Propan, Butan und deren Gemische sein. Damit kann eine Wolke, die die Elektrodenspitze abschirmt, hergestellt werden und die Graphitoberfläche der Elektrode mit einer festen Schicht bedeckt werden.

Ferner beschreibt die EP 0 548 042 A1 ein Verfahren zum Herstellen von Metallschmelzen, insbesondere Stahlschmelzen aus Schrott, in einem Elektrolichtbogenofen. Hierbei werden organische Substanzen durch eine zentrale Längsausnehmung einer Grafitelektrode eingebracht. Als organische Substanzen können Kohlenwasserstoffe in fester, flüssiger und/oder gasförmiger Form in den Lichtbogen eingebracht werden. Die Kohlenwasserstoffe können dort unter Kühlung der Elektrodenspitze zerlegt und die Zerlegungsprodukte in weiterer Folge verbrannt werden.

Die Aufgabe der vorliegenden Erfindung besteht darin, einen Lichtbogenofen der eingangs genannten Art effizienter zu betreiben.

Diese Aufgabe wird durch ein Verfahren mit den Merkmalen des Patentanspruchs 1 und durch einen Lichtbogenofen mit den Merkmalen des Patentanspruchs 11 gelöst. Vorteilhafte Weiterbildungen der vorliegenden Erfindung sind Gegenstand der abhängigen Ansprüche.

Bei dem erfindungsgemäßen Verfahren zum Betreiben eines Lichtbogenofens, wobei der Lichtbogenofen zumindest eine Elektrode umfasst, die eine Durchgangsöffnung aufweist, wird ein Lichtbogen zwischen der zumindest einen Elektrode und einem Schmelzgut erzeugt und ein erster Zusatzstoff wird in die Durchgangsöffnung der Elektrode eingebracht, wobei durch das Einbringen des ersten Zusatzstoffes in die Durchgangsöffnung eine endotherme chemische Reaktion bewirkt wird und wobei das Einbringen des ersten Zusatzstoffes derart gesteuert wird, dass die endotherme chemische Reaktion in einem vorbestimmten Bereich der zumindest einen Elektrode bewirkt wird, der dem Schmelzgut zugewandt ist, wobei beim Einbringen des ersten Zusatzstoffes eine Position, an der der erste Zusatzstoff in die Durchgangsöffnung eingebracht wird, verändert wird.

Der Lichtbogenofen kann insbesondere als Elektrolichtbogenofen ausgebildet sein. Der Lichtbogenofen umfasst zumindest eine Elektrode, die bevorzugt aus Grafit gefertigt ist. An der Elektrode kann mit Hilfe eines Ofentransformators eine elektrische Spannung bereitgestellt werden, in Folge der sich zwischen der Elektrode und dem Schmelzgut ein Lichtbogen ausbildet. Als Schmelzgut kann insbesondere Stahlschrott verwendet werden. Die zumindest eine Elektrode ist als Hohlelektrode ausgebildet. In das Innere der Elektrode, also in deren Durchgangsöffnung, kann ein erster Zusatzstoff eingebracht werden. Als erster Zusatzstoff kann ein Feststoff, ein Aerosol und/oder ein Fluid eingebracht werden. Insbesondere wird als erster Zusatzstoff ein Gas in die Öffnung der Elektrode eingebracht.

Der erste Zusatzstoff wird vorliegend so gewählt, dass eine endotherme chemische Reaktion bewirkt wird. Der erste Zusatzstoff kann auch so gewählt werden, dass die chemische Reaktion erst ab einer bestimmten Temperatur abläuft. Bei der chemischen Reaktion wird also Energie benötigt. Diese Energie kann der erwärmten Elektrode entnommen werden. Dies hat zur Folge, dass die Elektrode Wärmeenergie abgibt und somit gekühlt wird. Vorliegend wird das Einbringen des ersten Zusatzstoffes derart gesteuert, dass die endotherme chemische in einem Bereich der Elektrode stattfindet, der der Schmelze zugewandt ist. Somit kann der Bereich der Elektrode der beim Betrieb des Lichtbogenofens erhitzt wird, gekühlt werden. Damit können mechanische Spannungen in der Elektrode und der Abbrand der Elektrode verringert werden.

Zudem wird beim Einbringen des ersten Zusatzstoffes eine Position, an der der erste Zusatzstoff in die Durchgangsöffnung eingebracht wird, verändert. Zu diesem Zweck kann die Elektrode mehrere Öffnungen aufweisen, durch die der erste Zusatzstoff in die Durchgangsöffnung eingebracht werden kann. Damit kann der Bereich, in dem die endotherme chemische Reaktion erfolgt, beeinflusst werden.

Bevorzugt wird das Einbringen des ersten Zusatzstoffes derart gesteuert, dass die endotherme chemische Reaktion zumindest bereichsweise innerhalb der Durchgangsöffnung der zumindest einen Elektrode bewirkt wird. Somit kann die Elektrode besonders effektiv ausgehend von der Durchgangsöffnung gekühlt werden.

In einer Ausführungsform wird beim Einbringen des ersten Zusatzstoffes eine Menge des ersten Zusatzstoffes, die in die Durchgangsöffnung eingebracht wird, in Abhängigkeit von der Zeit gesteuert. Durch die Beeinflussung der Menge des ersten Zusatzstoffes kann die Kühlung der Elektrode in Folge der endothermen chemischen Reaktion gesteuert werden.

In einer weiteren Ausgestaltung wird beim Einbringen des ersten Zusatzstoffes eine Strömungsgeschwindigkeit des ersten Zusatzstoffes innerhalb der Durchgangsöffnung gesteuert. Durch die Steuerung der Strömungsgeschwindigkeit des ersten Zusatzstoffes entlang der Durchgangsöffnung, kann eingestellt werden, an welche Position innerhalb der Durchgangsöffnung die chemische Reaktion bewirkt wird.

Bevorzugt wird die Strömungsgeschwindigkeit des ersten Zusatzstoffes in Abhängigkeit von einem bei der endothermen chemischen Reaktion entstehenden Produkt gesteuert. Bei der chemischen Reaktion kann das Produkt mehr Gasmoleküle umfassen als das Edukt. In Folge dessen findet eine Volumenausdehnung statt. Ist das Edukt und das Produkt der chemischen Reaktion bekannt, kann die Strömungsgeschwindigkeit an die Volumenausdehnung angepasst werden.

In einer Ausführungsform ist die zumindest eine Elektrode aus Grafit gefertigt und die chemische Reaktion wird mit dem ersten Zusatzstoff und dem Grafit als Reaktionspartner bewirkt. Beispielsweise kann Kohlendioxid oder Wasserdampf als erster Zusatzstoff in die Durchgangsöffnung der Elektrode eingebracht werden. Hierbei kann das Material der Elektrode, also das Grafit bzw. der Kohlenstoff, als Reaktionspartner bei der endothermen chemischen Reaktion dienen.

In einer weiteren Ausführungsform werden als der erste Zusatzstoff ein erstes Gas und ein vom ersten Gas verschiedenes zweites Gas in die Durchgangsöffnung eingebracht. Beispielsweise kann Methan als erstes Gas und Wasserdampf als zweites Gas in die Öffnung eingebracht werden. Alternativ dazu kann Methan als erstes Gas und Kohlendioxid als zweites Gas in die Öffnung eingebracht werden. Darüber hinaus ist es denkbar, dass der erste Zusatzstoff Kohlendioxid als erstes Gas und Wasserstoff als zweites Gas umfasst. Diese ersten Zusatzstoffe weisen den Vorteil auf, dass die Elektrode nicht als Reaktionspartner dient und die endotherme Reaktion zum Kühlen der Elektrode unter Schonung der Elektrode erfolgen kann.

Bevorzugt werden eine Menge des ersten Gases und/oder eine Menge des zweiten Gases, die in die Durchgangsöffnung eingebracht werden, in Abhängigkeit von der Zeit gesteuert. Durch die Steuerung der Anteile der beiden Gase kann einerseits die Temperatur, ab der die chemische Reaktion einsetzt, und andererseits auch die Energie, die für die chemische Reaktion benötigt wird, beeinflusst werden.

Weiterhin vorteilhaft ist es, wenn zusätzlich ein zweiter Zusatzstoff zur Verringerung und/oder zur Erhöhung einer Feldstärke des Lichtbogens in die Durchgangsöffnung eingebracht wird. Zur Verringerung der Feldstärke des Lichtbogens bzw. des Plasmas kann ein zweiter Zusatzstoff in die Durchgangsöffnung eingebracht werden, der die Ionisationsenergie in dem Lichtbogen herabsetzt. Hierzu kann beispielsweise ein Metall oder ein Metallsalz als zweiter Zusatzstoff eingebracht werden. Um die Feldstärke zu erhöhen kann ein zweiter Zusatzstoff eingebracht werden, der die Ionisationsenergie in dem Lichtbogen erhöht. Dazu können als zweiter Zusatzstoff beispielsweise ein Gas, wie Argon, Stickstoff, Methan, Kohlendioxid oder dergleichen, in das Plasma eingebracht werden. Somit kann zusätzlich zur Kühlung der zumindest einen Elektrode der Lichtbogen in den unterschiedlichen Betriebsphasen des Lichtbogenofens beeinflusst werden.

In einer weiteren Ausgestaltung wird eine Außenfläche der zumindest einen Elektrode mit Wasser gekühlt. Beispielsweise kann Wasser von außen auf die Elektrode aufgesprüht werden. Bevorzugt kann die Elektrode nur in dem unteren Bereich, der dem Schmelzgut zugewandt ist, mit Wasser gekühlt werden. Somit kann zusätzlich zur chemischen Kühlung im Inneren der Elektrode die Elektrode von außen gekühlt werden.

Weiterhin wird erfindungsgemäß bereitgestellt ein Lichtbogenofen zum Schmelzen eines Schmelzgutes mit zumindest einer Elektrode, die eine Durchgangsöffnung aufweist, einer elektrischen Energiequelle zum Erzeugen eines Lichtbogens zwischen der zumindest einen Elektrode und dem Schmelzgut, einer Speichereinrichtung, in der ein erster Zusatzstoff angeordnet ist, wobei der erster Zusatzstoff in die Durchgangsöffnung der Elektrode einbringbar ist und wobei durch das Einbringen des ersten Zusatzstoffes in die Durchgangsöffnung eine endotherme chemische Reaktion bewirkbar ist und einer Steuereinrichtung, mit der das Einbringen des ersten Zusatzstoffes in die Durchgangsöffnung derart steuerbar ist, dass die endotherme chemische Reaktion in einem vorbestimmten Bereich der zumindest einen Elektrode bewirkbar ist, der dem Schmelzgut zugewandt ist, wobei beim Einbringen des ersten Zusatzstoffes eine Position, an der der erste Zusatzstoff in die Durchgangsöffnung eingebracht wird, veränderbar ist.

Die zuvor im Zusammenhang mit dem erfindungsgemäßen Verfahren beschriebenen Vorteile und Weiterbildungen können sinngemäß auf den erfindungsgemäßen Lichtbogenofen übertragen werden.

Die vorliegende Erfindung wird nun anhand der beigefügten Zeichnungen näher erläutert. Dabei zeigen:
- FIG 1: eine Darstellung eines Lichtbogenofens gemäß dem Stand der Technik in einer ersten Betriebsphase;
- FIG 2: den Lichtbogenofen gemäß FIG 1 in einer zweiten Betriebsphase; und
- FIG 3: eine schematisch Darstellung einer Elektrode eines Lichtbogenofens.

Die nachfolgend näher geschilderten Ausführungsbeispiele stellen bevorzugte Ausführungsformen der vorliegenden Erfindung dar.

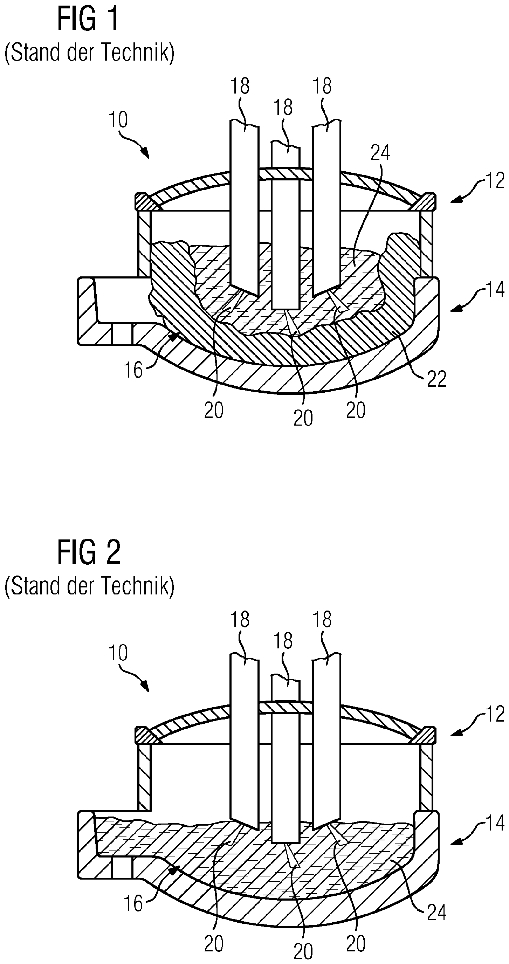

FIG 1 zeigt einen Lichtbogenofen 10 gemäß dem Stand der Technik in einer geschnittenen Seitenansicht. Der Lichtbogenofen 10 ist als Elektrolichtbogenofen ausgebildet. Der Lichtbogenofen 10 umfasst ein oberes Gehäuseteil 12 und ein unteres Gehäuseteil 14, die zueinander bewegt werden können. Der Lichtbogenofen 10 dient zum Schmelzen eines Schmelzgutes 16, insbesondere Stahlschrott. Das Schmelzgut 16 befindet sich in dem unteren Gehäuseteil 14.

Des Weiteren umfasst der Lichtbogenofen 10 zumindest eine Elektrode 18. Im vorliegenden Ausführungsbeispiel umfasst der Lichtbogenofen 10 drei Elektroden 18. Die Elektroden 18 sind mit einem hier nicht dargestellten Ofentransformator verbunden, mit dem eine elektrische Spannung an den Elektroden 18 bereitgestellt werden kann. An den Elektroden 18 werden die elektrische Spannung und/oder die elektrische Stromstärke so gewählt, dass sich jeweils zwischen den Elektroden 18 und dem Schmelzgut 16 ein Lichtbogen 20 ausbildet. Der Abstand der Elektroden 18 zum Schmelzgut 16 kann eingestellt werden, um bei kleinem Abstand den Lichtbogen 20 zu zünden und während des Betriebs durch Vergrößern des Abstands elektrische Betriebsparameter zu beeinflussen.

In FIG 1 ist der Lichtbogenofen 10 in einer ersten Betriebsphase dargestellt. Hier liegt das Schmelzgut 16 als Feststoff 22 vor. Dem Feststoff 22 bzw. dem Schrott wird durch die Lichtbögen 20 Energie zugeführt. Dies bewirkt, dass der Feststoff 22 geschmolzen wird und das Schmelzgut 16 somit als Schmelze 24 vorliegt.

FIG 2 zeigt den Lichtbogenofen 10 gemäß FIG 1 in einer zweiten Betriebsphase. Hierbei liegt das Schmelzgut 16 bereits vollständig als Schmelze 24 vor. Durch die Energie, die mittels der Lichtbögen 20 in die Schmelze 24 eingebracht wird, kann eine vorbestimmte Zieltemperatur der Schmelze 24 eingestellt werden.

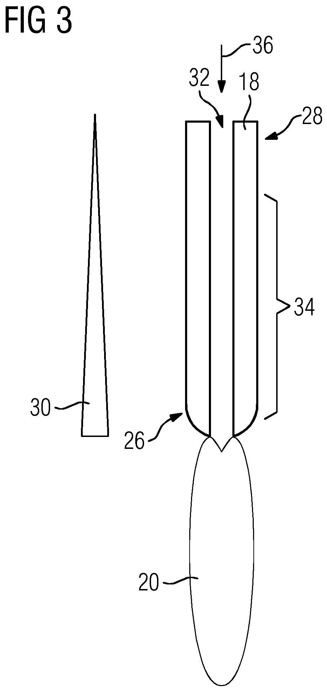

FIG 3 zeigt eine schematische Darstellung einer Elektrode 18 eines Lichtbogenofens 10 in einer geschnittenen Seitenansicht. Während des Betriebs des Lichtbogenofens 10 bildet sich ein Temperaturgradient entlang der Elektrode 18 aus. Dieser entsteht dadurch, dass die Elektrode 18 in einem unteren, dem Schmelzgut 16 zugewandten Bereich 26 durch den Lichtbogen 20 und die Schmelze 24 auf eine Temperatur von bis zu 3000 K erwärmt wird. An dem unteren Bereich 26 der Elektrode 18 bildet sich auch der Lichtbogen 20 aus. Ein oberer Bereich 28 der Elektrode 18, der dem unteren Bereich 26 gegenüberliegt, weist in etwa die Temperatur der Umgebung, beispielsweise die Umgebungstemperatur in einer Halle, auf. Der Temperaturgradient ist vorliegende durch den Pfeil 30 veranschaulicht. Durch den Temperaturgradienten können mechanische Spannungen innerhalb der Elektrode 18 entstehen, die eine Beschädigung der Elektrode 18 zur Folge haben können. Zudem können die hohen Temperaturen im unteren Bereich 26 der Elektrode 18 einen Abbrand der Elektrode 18 bewirken.

Die Elektrode 18 ist vorliegend als Hohlelektrode ausgebildet. Die Elektrode 18 weist im Wesentlichen die Form eines Hohlzylinders auf. Die Elektrode 18 weist eine Durchgangsöffnung 32 auf, die sich von dem oberen Bereich 28 bis zum unteren Bereich 26 der Elektrode 18 entlang einer Längserstreckungsrichtung der Elektrode 18 erstreckt. In die Durchgangsöffnung 32 kann ein erster Zusatzstoff eingebracht werden. Dies ist vorliegend durch den Pfeil 36 veranschaulicht. Zu diesem Zweck kann an der Elektrode 18 ein entsprechendes Anschlusselement angeordnet sein, das mit einer Speichereinrichtung oder einem Reservoir verbunden ist, in dem der erste Zusatzstoff angeordnet ist. Insbesondere wird als Zusatzstoff ein erstes Gas in die Durchgangsöffnung 32 eingebracht. Durch das Einbringen des ersten Zusatzstoffes in die Durchgangsöffnung 32 wird eine endotherme chemische Reaktion bewirkt. Als erster Zusatzstoff kann beispielsweise Kohlendioxid oder Wasserdampf eingebracht werden. Beispiele für solche Reaktionen sind:

| | | |
|---|---|---|
| CO₂ + C → 2 CO; | ΔH_{R} = +172,6 kJ/mol | (1) |
| C + H₂O → CO + H₂ ; | ΔH_{R} = +131,4 kJ/mol | (2) |
| C + 2 H₂O → CO₂ + 2 H₂; | ΔH_{R} = +90,2 kJ/mol | (3) |

Bei den Reaktionen, die in den Gleichungen (1) bis (3) beschrieben sind, dient das Elektrodenmaterial Grafit bzw. Kohlenstoff als Reaktionspartner. Dabei beschreibt die Gleichung (1) das sogenannte Boudouard-Gleichgeweicht. ΔH_{R} beschreibt dabei die Energiemenge, die benötigt wird, um die endotherme chemische Reaktion zum Ablauf zu bringen. Diese Energiemenge ΔH_{R} wird der Umgebung entnommen. Insbesondere wird die Energie in Form von Wärmeenergie von der Elektrode 18 entnommen.

Als Zusatzstoff können auch ein erstes und ein zweites Gas in die Öffnung 32 der Elektrode 18 eingeleitet werden. Hierbei dient die Elektrode 18 nicht als Reaktionspartner bei der chemischen Reaktion. Beispielsweise können Methan und Wasserdampf, Methan und Kohlendioxid oder Kohlendioxid und Wasserstoff in die Durchgangsöffnung 32 eingebracht werden. Beispiele für derartige Reaktionen sind:

| | | |
|---|---|---|
| CH₄ + H₂O → CO + 3 H₂; | ΔH_{R} = +206,2 kJ/mol | (4) |
| CH₄ + CO₂ → 2 CO + 2 H₂ ; | ΔH_{R} = +250,0 kJ/mol | (5) |
| CO₂ + H₂ → CO + H₂O; | ΔH_{R} = +41,2 kJ/mol | (6) |

Dabei ist zu beachten, dass die in den Gleichungen (1) bis (6) beschriebenen Reaktionen Gleichgewichtsreaktionen sind, die insbesondere nur bei Temperaturen über 300 K ablaufen. Allerdings werden die Gleichgewichte auf Grund der Thermodynamik bei verschiedenen Temperaturniveaus auf die Seite der Produkte verschoben.

Durch die Wahl der Reaktionspartner kann sowohl die für die Reaktion benötigte Energiemenge ΔH_{R} als auch die Temperatur, bei welcher die Reaktion stattfindet, eingestellt werden. Da entlang der Elektrode 18 ein Temperaturgradient vorliegt, kann durch die Wahl der chemischen Reaktion auch der Bereich 34 entlang der Elektrodenachse kontrolliert und verändert werden, in dem die chemische Kühlwirkung einsetzt. Dabei ist allerdings zu beachten, dass die oben beschriebenen Gleichgewichte bei Temperaturen unterhalb von 500 °C in Abwesenheit von Katalysatoren kinetisch gehemmt sein können und dadurch mit einer endlichen Geschwindigkeit ablaufen, so dass die Einstellung des thermodynamischen Gleichgewichts verzögert erfolgt.

Solche Verzögerungen können gegebenenfalls durch die Einstellung der Strömungsgeschwindigkeit des ersten Zusatzstoffes in der Durchgangsöffnung 32 der Elektrode 18 kompensiert werden. Des Weiteren ist zu beachten, dass alle oben beschriebenen Reaktionen mit Ausnahme der Reaktion nach Gleichung (6) unter Volumenzunahme ablaufen. D. h. auf der Eduktseite sind pro Formelumsatz weniger gasförmige Moleküle beteiligt als auf der Produktseite. Beispielsweise werden bei der Reaktion nach Gleichung (4) aus zwei Gasmolekülen vier gebildet. Diese Volumenzunahme führt zu einer Zunahme der Strömungsgeschwindigkeit, wodurch ein zusätzlicher Kühleffekt in heißen Bereichen der Elektrode 18 erzielt werden kann.

Um zu verhindern, dass die endotherme chemische Reaktion zu früh, d. h. im oberen Bereich 28 der Elektrode 18, abläuft, ist es möglich, mehrere (hier nicht dargestellte) Bereiche für das Zuführen des ersten Zusatzstoffes in die Durchgangsöffnung 32 vorzusehen und damit räumliche Freiheitsgrade zu nutzen.

Zusätzlich zu dem ersten Zusatzstoff kann ein zweiter Zusatzstoff in die Durchgangsöffnung 32 der Elektrode 18 eingebracht werden, durch den die Eigenschaften des Lichtbogens 20 beeinflusst werden können. Beispielsweise kann die Feldstärke des Lichtbogens 20 durch den zweiten Zusatzstoff beeinflusst werden. Damit kann eine Kombination der Lichtbogenbeeinflussung und der chemischen Kühlung der Elektroden 18 mit einem gemeinsamen apparativen Aufbau bereitgestellt werden. Zur Steuerung des Einbringens des ersten und/oder des zweiten Zusatzstoffes können die elektrische Spannung und/oder die Stromstärke des Lichtbogens überwacht werden.

Durch das Einbringen von Gasen wie Kohlenmonoxid, Kohlendioxid, Wasserstoff, Wasserdampf und/oder Methan, die neben Gasen wie Argon, Stickstoff, Sauerstoff und/oder Pressluft ohnehin zur Beeinflussung des Lichtbogenplasmas eingesetzt werden können, kann eine zusätzliche Kühlung der Elektroden 18 erreicht werden. Zudem kann in den einzelnen Betriebsphasen des Lichtbogenofens 10 die Menge der Gase, die Position, an der die Gase in die Durchgangsöffnung 32 eingebracht werden, und/oder deren Strömungsgeschwindigkeit gesteuert werden.

Dies bietet die Möglichkeit ein Regelungs- und Automatisierungskonzept zu entwickeln, in dem in einem mehrdimensionalen Parameterraum sowohl die Energieeintrag in das Schmelzgut 16 durch den Lichtbogen 20 als auch die Kühlung der Elektroden 18 und der Abbrand der Elektroden 18 in günstiger Weise durch die Wahl der Gaskombinationen, deren Mischverhältnisse, dem Ort der Einspeisung der Gase in die Durchgangsöffnung 32, der Strömungsgeschwindigkeit und/oder des Volumenstroms der Gase beeinflusst werden kann.

## Patentansprüche

1. Verfahren zum Betreiben eines Lichtbogenofens (10), der zumindest eine Elektrode (18) umfasst, die eine Durchgangsöffnung (32) aufweist, wobei bei dem Verfahren ein Lichtbogen (20) zwischen der zumindest einen Elektrode (18) und einem Schmelzgut (16) erzeugt wird und ein erster Zusatzstoff in die Durchgangsöffnung (32) der Elektrode (18) eingebracht wird, wobei durch das Einbringen des ersten Zusatzstoffes in die Durchgangsöffnung (32) eine endotherme chemische Reaktion bewirkt wird, wobei das Einbringen des ersten Zusatzstoffes derart gesteuert wird, dass die endotherme chemische Reaktion in einem vorbestimmten Bereich (34) der zumindest einen Elektrode (18) bewirkt wird, der dem Schmelzgut (16) zugewandt ist,
**dadurch gekennzeichnet, dass**
beim Einbringen des ersten Zusatzstoffes eine Position, an der der erste Zusatzstoff in die Durchgangsöffnung (32) eingebracht wird, verändert wird.

2. Verfahren nach Anspruch 1, **dadurch gekennzeichnet, dass** das Einbringen des ersten Zusatzstoffes derart gesteuert wird, dass die endotherme chemische Reaktion zumindest bereichsweise innerhalb der Durchgangsöffnung (32) der zumindest einen Elektrode (18) bewirkt wird.

3. Verfahren nach Anspruch 1 oder 2, **dadurch gekennzeichnet, dass** beim Einbringen des ersten Zusatzstoffes eine Menge des ersten Zusatzstoffes, die in die Durchgangsöffnung (32) eingebracht wird, in Abhängigkeit von der Zeit gesteuert wird.

4. Verfahren nach einem der vorhergehenden Ansprüche, **dadurch gekennzeichnet, dass** beim Einbringen des ersten Zusatzstoffes eine Strömungsgeschwindigkeit des ersten Zusatzstoffes innerhalb der Durchgangsöffnung (32) gesteuert wird.

5. Verfahren nach Anspruch 4, **dadurch gekennzeichnet, dass** die Strömungsgeschwindigkeit des ersten Zusatzstoffes in Abhängigkeit von einem bei der endothermen chemischen Reaktion entstehenden Produkt gesteuert wird.

6. Verfahren nach einem der vorhergehenden Ansprüche, **dadurch gekennzeichnet, dass** die zumindest eine Elektrode (18) aus Grafit gefertigt ist und die endotherme chemische Reaktion mit dem ersten Zusatzstoff und dem Grafit als Reaktionspartner bewirkt wird.

7. Verfahren nach einem der Ansprüche 1 bis 6, **dadurch gekennzeichnet, dass** als der erste Zusatzstoff ein erstes Gas und ein vom ersten Gas verschiedenes zweites Gas in die Durchgangsöffnung (32) eingebracht werden.

8. Verfahren nach Anspruch 7, **dadurch gekennzeichnet, dass** eine Menge des ersten Gases und/oder eine Menge des zweiten Gases, die in die Durchgangsöffnung (32) eingebracht wird, in Abhängigkeit von der Zeit gesteuert werden.

9. Verfahren nach einem der vorhergehenden Ansprüche, **dadurch gekennzeichnet, dass** zusätzlich ein zweiter Zusatzstoff zur Verringerung und/oder zur Erhöhung einer Feldstärke des Lichtbogens (20) in die Durchgangsöffnung (32) eingebracht wird.

10. Verfahren nach einem der vorhergehenden Ansprüche, **dadurch gekennzeichnet, dass** eine Außenfläche der zumindest einen Elektrode (18) mit Wasser gekühlt wird.

11. Lichtbogenofen (10) zum Schmelzen eines Schmelzgutes (16) mit zumindest einer Elektrode (18), die eine Durchgangsöffnung (32) aufweist, einer elektrischen Energiequelle zum Erzeugen eines Lichtbogens (20) zwischen der zumindest einen Elektrode (18) und dem Schmelzgut (16), einer Speichereinrichtung, in der ein erster Zusatzstoff angeordnet ist, wobei der erster Zusatzstoff in die Durchgangsöffnung (32) der Elektrode (18) einbringbar ist und durch das Einbringen des ersten Zusatzstoffes in die Durchgangsöffnung (32) eine endotherme chemische Reaktion bewirkbar ist, wobei der Lichtbogenofen (10) eine Steuereinrichtung umfasst, mit der das Einbringen des ersten Zusatzstoffes derart steuerbar ist, dass die endotherme chemische Reaktion in einem vorbestimmten Bereich (32) der zumindest einen Elektrode (18) bewirkbar ist, der dem Schmelzgut (16) zugewandt ist,
**dadurch gekennzeichnet, dass**
beim Einbringen des ersten Zusatzstoffes eine Position, an der der erste Zusatzstoff in die Durchgangsöffnung (32) eingebracht wird, veränderbar ist.

## Claims

1. Method for operating an arc furnace (10) comprising at least one electrode (18) which has a through-hole (32), wherein the method consists of an arc (20) being produced between the at least one electrode (18) and a charge material (16) to be melted and a first additive being introduced into the through-hole (32) of the electrode (18), wherein an endothermic chemical reaction is brought about by introducing the first additive into the through-hole (32), wherein the introduction of the first additive is controlled such that the endothermic chemical reaction is brought about in a predetermined region (34) of the at least one electrode (18), said region facing the charge material (16) to be melted,
**characterised in that**
for introducing the first additive, the position at which the first additive is introduced into the through-hole (32) is varied.

2. Method according to claim 1, **characterised in that** the introduction of the first additive is controlled such that the endothermic chemical reaction is brought about at least in some areas inside the through-hole (32) of the at least one electrode (18).

3. Method according to claim 1 or 2, **characterised in that**, for introducing the first additive, the quantity of first additive introduced into the through-hole (32) is controlled as a function of time.

4. Method according to one of the preceding claims, **characterised in that**, for introducing the first additive, the flow rate of the first additive inside the through-hole (32) is controlled.

5. Method according to claim 4, **characterised in that** the flow rate of the first additive is controlled as a function of a product resulting from the endothermic chemical reaction.

6. Method according to one of the preceding claims, **characterised in that** the at least one electrode (18) is made of graphite and the endothermic chemical reaction is brought about using the first additive and the graphite as reactants.

7. Method according to one of claims 1 to 6, **characterised in that** a first gas and a second gas different from the first gas are introduced into the through-hole (32) as the first additive.

8. Method according to claim 7, **characterised in that** the quantity of first gas and/or the quantity of second gas introduced into the through-hole (32) are controlled as a function of time.

9. Method according to one of the preceding claims, **characterised in that** a second additive is additionally introduced into the through-hole (32) to reduce and/or increase the field strength of the arc (20).

10. Method according to one of the preceding claims, **characterised in that** an external surface of the at least one electrode (18) is water-cooled.

11. Arc furnace (10) for melting a charge material (16), comprising at least one electrode (18) which has a through-hole (32), an electrical energy source for producing an arc (20) between the at least one electrode (18) and the charge material (16) to be melted, a storage device in which the first additive is disposed, wherein the first additive can be introduced into the through-hole (32) of the electrode (18) and, by introducing the first additive into the through-hole (32), an endothermic chemical reaction can be brought about, wherein the arc furnace (10) comprises a control device by which the introduction of the first additive can be controlled such that the endothermic chemical reaction can be brought about in a predetermined region (32) of the at least one electrode (18), said region facing the charge material (16) to be melted,
**characterised in that**
for introducing the first additive, the position at which the first additive is introduced into the through-hole (32) can be varied.

## Revendications

1. Procédé de fonctionnement d'un four à arc (10), qui comprend au moins une électrode (18) présentant une ouverture traversante (32), dans lequel, dans le cadre du procédé, un arc (20) est créé entre la au moins une électrode (18) et une matière à fondre (16), et un premier additif est introduit dans l'ouverture traversante (32) de l'électrode (18), dans lequel une réaction chimique endothermique est provoquée par l'introduction du premier additif dans l'ouverture traversante (32), dans lequel l'introduction du premier additif est commandée de telle manière que la réaction chimique endothermique est provoquée dans un secteur (34) prédéterminé, tourné vers la matière à fondre (16), de la au moins une électrode (18),
**caractérisé en ce que**
lors de l'introduction du premier additif, une position au niveau de laquelle le premier additif est introduit dans l'ouverture traversante (32) est modifiée.

2. Procédé selon la revendication 1, **caractérisé en ce que** l'introduction du premier additif est commandée de telle manière que la réaction chimique endothermique est provoquée au moins partiellement à l'intérieur du trou traversant (32) de la au moins une électrode (18).

3. Procédé selon la revendication 1 ou 2, **caractérisé en ce que**, lors de l'introduction du premier additif, une quantité du premier additif qui est introduit dans l'ouverture traversante (32) est commandée en fonction du temps.

4. Procédé selon l'une quelconque des revendications précédentes, **caractérisé en ce que**, lors de l'introduction du premier additif, une vitesse d'écoulement du premier additif à l'intérieur de l'ouverture traversante (32) est commandée.

5. Procédé selon la revendication 4, **caractérisé en ce que** la vitesse d'écoulement du premier additif est commandée en fonction d'un produit apparaissant lors de la réaction chimique endothermique.

6. Procédé selon l'une quelconque des revendications précédentes, **caractérisé en ce que** la au moins une électrode (18) est réalisée en graphite et la réaction chimique endothermique est provoquée avec le premier additif et le graphite comme partenaires de réaction.

7. Procédé selon l'une quelconque des revendications 1 à 6, **caractérisé en ce qu'**un premier gaz et un deuxième gaz différent du premier gaz sont introduits dans l'ouverture traversante (32) en tant que premier additif.

8. Procédé selon la revendication 7, **caractérisé en ce qu'**une quantité du premier gaz qui est introduit dans l'ouverture traversante (32) et/ou une quantité du deuxième gaz qui est introduit dans l'ouverture traversante (32) est/sont commandée(s) en fonction du temps.

9. Procédé selon l'une quelconque des revendications précédentes, **caractérisé en ce qu'**un deuxième additif destiné à réduire et/ou à augmenter une intensité de champ de l'arc (20) est introduit de manière supplémentaire dans le trou traversant (32).

10. Procédé selon l'une quelconque des revendications précédentes, **caractérisé en ce qu'**une surface extérieure de la au moins une électrode (18) est refroidie par de l'eau.

11. Four à arc (10) destiné à faire fondre une matière à fondre (16) avec au moins une électrode (18) présentant une ouverture traversante (32), une source d'énergie électrique destinée à créer un arc (20) entre la au moins une électrode (18) et la matière à fondre (16), une unité de stockage au sein de laquelle est agencée un premier additif, dans lequel le premier additif peut être introduit dans l'ouverture traversante (32) de l'électrode (18) et une réaction chimique endothermique peut être provoquée par l'introduction du premier additif dans l'ouverture traversante (32), dans lequel le four à arc (10) comprend un appareil de commande avec lequel l'introduction du premier additif peut être commandée de telle manière que la réaction chimique endothermique peut être provoquée dans un secteur (32) prédéterminé, tourné vers la matière à fondre (16), de la au moins une électrode (18),
**caractérisé en ce que**
lors de l'introduction du premier additif, une position au niveau de laquelle le premier additif est introduit dans l'ouverture traversante (32) peut être modifiée.
